# EUROPÄISCHE PATENTSCHRIFT

(11) **EP 1 777 092 B1**
(45) Veröffentlichungstag und Bekanntmachung des Hinweises auf die Patenterteilung: **30.04.2008**
(21) Anmeldenummer: 05023050.7
(22) Anmeldetag: 21.10.2005
(51) Int. Cl.: B60K 7/00, B60K 17/04

(54) **Radantriebseinheit**
Wheel drive unit
Ensemble d'entraînement de roue

(43) Veröffentlichungstag der Anmeldung: 25.04.2007
(73) Patentinhaber: Joseph Vögele AG, 68146 Mannheim (DE)
(72) Erfinder: Braun, Arthur, 67146 Deidesheim (DE)
(74) Vertreter: Grünecker, Kinkeldey, Stockmair & Schwanhäusser Anwaltssozietät

(56) Entgegenhaltungen:
- WO-A-98/35848
- DE-A1- 10 127 275
- DE-A1- 10 334 546

## Beschreibung

Die Erfindung betrifft eine Radantriebseinheit der im Oberbegriff des Patentanspruchs 1 angegebenen Art.

Aus DE 103 34 546 ist eine Radantriebseinheit bekannt, bei der ein Hydromotor oben horizontal angeordnet ist, von dem sich ein Übersetzungsgetriebe in Form eines Stirnradgetriebes nach unten erstreckt. Im Radnabenantriebsteil ist ein Planetengetriebe mit zwei Friktionskupplungen zum Schalten und als Betriebsbremsvorrichtung enthalten.

Bei einer aus DE 101 27 275 A bekannten Antriebsvorrichtung, die auch die Merkmarle des Oberbegriffs des 1. Anspruchs beinhaltet, eines Nutzfahrzeugs ist ein Hydromotor direkt in die Radantriebseinheit innen eingegliedert, so dass seine Ausgangswellen-Drehachse unterhalb und senkrecht zu der Radantriebsachse liegt. Dazwischen ist eine Kegelradgetriebestufe vorgesehen.

Bei einem aus WO 98/35848 A bekannten Niederflur-Elektronutzfahrzeug ist an ein Radnabengetriebe ein Elektromotor so angeflanscht, dass seine Ausgangswellen-Drehachse senkrecht zur Radantriebsachse steht. Die Drehung und das Drehmoment des Elektromotors werden über eine Kegelradgetriebestufe auf die Radantriebsachse übertragen. Der Elektromotor kann horizontal und vertikal oder in beliebigen Lagen im Raum angeordnet sein.

Bei der aus EP 0 743 219 B bekannten Radantriebseinheit sind in den angetriebenen Hinterrädern einzeln antreibende hydrostatische Radantriebseinheiten installiert, jeweils mit einem in der Radnabe angeordneten Planetenradgetriebe, einem Reduktionsgetriebe und einem Hydromotor. In ähnlicher Weise sind in getriebenen Vorderrädern einzeln antreibende Radantriebseinheiten in die Radnaben eingebaut, deren jede einen Planetenradsatz aufweist, der über einen Freilauf von einem Hydromotor angetrieben ist. Sowohl für die Vorder- als auch die Hinterräder sind die Hydromotoren so installiert, dass die Drehachse der Ausgangswelle des Hydromotors achsparallel zum Sonnenrad oder sogar koaxial mit diesem ist. Dies bedingt verhältnismäßig viel Einbauraum in Querrichtung, und erschwert Wartungen und Reparaturen speziell in den Hydromotoren. In einem Straßenfertiger oder gegebenenfalls Beschicker ist im Chassis eine Längsfördervorrichtung eingebaut, deren Tunnel relativ viel Platz in Querrichtung beansprucht, so dass der Einbauraum für die Radantriebseinheiten beschränkt ist.

Aus dem Prospekt "SUPER 1402" der Firma Joseph Vögele AG, D-68146 Mannheim, gedruckt am 09.08.1995, ist es bekannt, die beiden Hinterräder über eine quer durchgehende Getriebeachse anzutreiben, in der ein sperrbares Differential und Trommelbremsen vorgesehen sind, und die von einem zentralen Hydromotor angetrieben wird. Es handelt sich um eine Portalachse, die über den Tunnel der Längsfördervorrichtung hinweg gebaut ist. Diese Bauweise ist aufwendig, schwer und teuer.

Der Erfindung liegt die Aufgabe zugrunde, eine Radantriebseinheit der eingangs genannten Art zu schaffen, die trotz eines Einzelradantriebs eine platzsparende Konstruktion ermöglicht, kostengünstig ist, und bei der der Hydromotor zu Wartungs- und Reparaturarbeiten gut zugänglich ist.

Die gestellte Aufgabe wird mit den Merkmalen des Patentanspruchs 1 gelöst.

Durch die Kegelradgetriebestufe im Antriebsstrang wird die Möglichkeit geschaffen, trotz beengten Bauraums zwischen dem Chassis bzw. dem Tunnel im Chassis und dem Rad den Hydromotor so zu platzieren, dass er für Wartungen und Reparaturen gut zugänglich ist, weder mit dem Tunnel, noch mit dem Rad kollidiert, und dennoch die Antriebsverbindung auch für hohe Drehmomente geeignet ist. Hier brauchbare Kegelradgetriebestufen sind kostengünstig in verschiedenen Spezifikationen erhältlich und zeichnen sich dadurch aus, dass sie im vorliegenden Einsatzfall in Querrichtung außerordentlich wenig Bauraum beanspruchen. Die Einbauposition des Hydromotors mit nach unten orientierter Drehachse der Ausgangswelle spart ebenfalls in Querrichtung Platz, und nutzt den Hochrichtung verfügbaren Einbauraum optimal. Der Hydromotor ist gut zugänglich. Da ein Straßenfertiger oder Beschicker gegebenenfalls mit in Relation zur Arbeitsfahrtgeschwindigkeit (z.B. 1,5 bis 16 m/min) relativ hoher Transportgeschwindigkeit (z.B. bis 20 Km/h) gefahren werden muss, wofür der Verstellbereich der üblicherweise hier eingesetzten Hydromotoren für den gesamten Geschwindigkeitsbereich nicht ausreicht, ist es vorteilhaft, in der Antriebsverbindung ein Mehrgang-Schaltgetriebe vorzusehen, insbesondere ein Zweigang-Schaltgetriebe, das bei Einbau zwischen dem Hydromotor und der Kegelradgetriebestufe aus dem beengten Bereich zwischen dem Tunnel und dem Rad nach oben oder an eine andere geeignete Stelle versetzt ist. Der Hydromotor ist oberhalb der Radnabe angeordnet, vorzugsweise sogar oberhalb eines benachbart zur Radnabe verlaufenden Tunnels der Längsfördervorrichtung des Straßenfertigers bzw. Beschickers. In diesem Bereich ist auch bei schmalen Maschinen genügend Einbauraum für die stehende Platzierung des Hydromotors gegeben. Die Kegelradgetriebestufe weist ein mit dem Sonnenrad koaxial verbundenes Tellerrad und ein mit dem Tellerrad kämmendes Kegeltreibritzel auf. Hierbei lässt sich als zusätzliche Stufe eine Untersetzung ins Langsame integrieren. Um Bauraum zu sparen, werden das Tellerrad und das Kegeltreibritzel in das Getriebegehäuse des Planetenradsatzes eingegliedert und darin gelagert. Vom Getriebegehäuse des Planetenradsatzes zum Hydromotor bzw. zum Mehrgang-Schaltgetriebe erstreckt sich ein schlanker Gehäusetunnel, der in Querrichtung wenig Bauraum beansprucht, und in dem eine das Kegeltreibritzel aufweisende oder damit gekuppelte Überbrückungswelle gelagert ist. Die Überbrückungswelle ermöglicht es, den Hydromotor, und gegebenenfalls das Mehrgang-Schaltgetriebe, so hoch wie gewünscht zu positionieren.

Da Kegelradgetriebestufen jedoch problemlos auch mit anderen Kegelwinkeln hergestellt werden können, ist bei einer zweckmäßigen Ausführungsform der Versetzungswinkel sogar größer als 90°, d.h., ist die Drehachse der Ausgangswelle schräg nach innen in Richtung zur Mitte des Straßenfertigers oder Beschickers geneigt. Diese Ausführungsform ist deshalb zweckmäßig, weil die Rad-Bereifung solcher schweren Maschinen außerordentlich weite Toleranzen hat, d.h. sich im Laufe der Benutzung erheblich verbreitert. So wurden Verbreiterungen von 20 bis 30 mm festgestellt, die die Gefahr einer Kollision zwischen zumindest dem Hydromotor und dem Reifen bedingen. Indem mit Hilfe der Kegelradgetriebestufe der Hydromotor etwas schräg nach innen gekippt wird, wird genügend Freiraum zum Reifen geschaffen. In diesem Fall kann es aus Platzgründen sogar zweckmäßige sein, den Tunnel zumindest im Bereich der Radantriebseinheit und gegebenenfalls oben mit einer abgeschrägten Seitenwand zu versehen, die die Gutförderung nicht behindert.

Bei einer zweckmäßigen Ausführungsform ist das Mehrgang-Schaltgetriebe ein Stirnrad-Aufsteckgetriebe oder ein Koaxial-Planetengetriebe. Diese Getriebetypen bauen kompakt, sind kostengünstig herstellbar, und haben hohe Lebensdauer. Das Mehrgang-Schaltgetriebe wird zweckmäßig mechanisch oder hydraulisch oder mit einer elektrischen Schaltkupplung geschaltet, beispielsweise zwischen zwei Schaltstufen für Arbeitsfahrt und Transportfahrt.

Da mit dem Konzept des Kegelradgetriebesatzes in Querrichtung Bauraum gespart wird, ist zweckmäßigerweise in die Radnabe auch eine Betriebsbremsvorrichtung eingegliedert, vorzugsweise zwischen einem Träger des Planetenradsatzes und der Radnabe. Die Betriebsbremsvorrichtung kann sogar als Feststellbremse ausgelegt und eine Trommelbackenbremse mit hydraulischer Servobetätigung oder eine trocken- oder nasslaufende hydraulische Lamellenbremse sein.

Für die Bremsbetätigung ist es zweckmäßig, wenn die Betriebsbremse mit Druckaufbau, vorzugsweise über einen Druckspeicher, einrückbar ist. Der Druckspeicher stellt eine Druckkapazität zur Verfügung, die auch bei nicht laufendem Antriebsmotor zumindest einige Bremsbetätigungen ermöglicht. Alternativen wird die Betriebsbremse drucklos durch Federkraft eingerückt und gegen die Federkraft hydraulisch ausgerückt. Dank der die Bremse einrückenden Federkraft kann die Betriebsbremse auch die Funktion einer Feststellbremse übernehmen.

Anhand der Zeichnung werden Ausführungsformen des Erfindungsgegenstandes erläutert. Es zeigen:
- Fig. 1: eine schematische Seitenansicht eines Baumaschine am Beispiel eines Straßenfertigers, und
- Fig. 2: einen schematischen Teilquerschnitt zur Verdeutlichung des Antriebskonzepts in einer Radantriebseinheit.

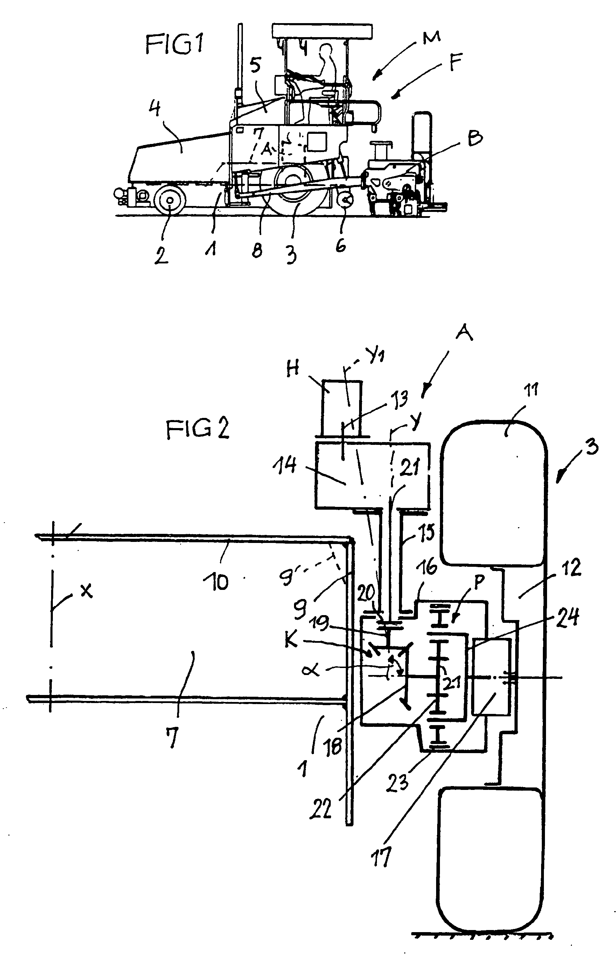

Eine in Fig. 1 gezeigte Baumaschine M ist beispielsweise ein Straßenfertiger F, genauer gesagt ein sogenannter Radfertiger mit bereiften Rädern 2, 3 an einem Chassis 1. Im Regelfall werden nur die beiden Hinterräder 3 einzeln angetrieben. Gegebenenfalls sind auch die Vorderräder 2 antreibbar (Allradantrieb). Die Räder 2, 3 sind am Chassis gelagert. Das Chassis trägt am Vorderende des Straßenfertigers F einen Gutbunker 4, hinter dem eine Primärantriebsquelle 5 vorgesehen ist. Am hinteren Ende des Chassis 1 ist eine Querverteilvorrichtung 6 (Schneckenvorrichtung) installiert, die aus dem Gutbunker 4 durch eine im Chassis 1 verlaufende Längsfördervorrichtung 7 nach hinten abgeworfenes Einbaugut auf dem Untergrund ausbreitet und einer Einbaubohle B vorlegt. Die Einbaubohle B ist mit Auslegern 8 an das Chassis 1 angelenkt. Jedes Hinterrad 3 weist zum Einzelradantrieb eine Radantriebseinheit A auf (gegebenenfalls auch die Vorderräder 2), die anhand Fig. 2 erläutert wird. Eine Differentialsperre kann hydraulisch gesteuert sein.

Fig. 2 ist die Hälfte eines Querschnitts durch Hauptkomponenten des Straßenfertigeres F in Fig. 1 in der Vertikalebene der Achse des Hinterrads 3. Der im Chassis 1 längs verlaufende Tunnel 7 der Längsfördervorrichtung weist eine Seitenwand 9 und eine Deckwand 10 auf. Gegebenenfalls ist die Seitenwand 9 zumindest im Bereich der Radantriebseinheit A und wie bei 9' gestrichelt angedeutet, nach innen abgeschrägt.

Das Rad 3 weist eine Radnabe 12 und einen Reifen 11 auf. Die Radantriebseinheit A für das Rad 3 weist einen Hydromotor H auf, dessen Ausgangswelle 13 annähernd vertikal angeordnet und mit einem Planetenradsatz P in der Radnabe 12 in Antriebsverbindung ist. Zwischen dem Hydromotor H und dem Planetenradsatz P ist eine Kegelradgetriebestufe K vorgesehen, die den Versetzungswinkel α zwischen der Drehachse der Ausgangswelle 13 und der Drehachse eines Sonnenrads 21 oder der Radachse ausgleicht.

Als Option ist zwischen dem Hydromotor H und der Kegelradgetriebestufe K ein Mehrgangschaltgetriebe 14 installiert, das beispielsweise ein Zweigang-Schaltgetriebe (entweder ein Stirnrad-Aufsteckgetriebe oder ein Koaxial-Planetenradgetriebe) ist und sich zwischen einer Transportgangstufe und einer Arbeitsfahrstufe schalten lässt, beispielsweise mechanisch, hydraulisch oder mit einer elektrischen Schaltkupplung.

Zwischen dem Mehrgang-Schaltgetriebe 14 und einem Getriebegehäuse 16 des Planetenradsatzes in der Radnabe 12 erstreckt sich ein schlanker Gehäusetunnel 15, in welchem eine ggfs. vertikale (Drehachse Y) Überbrückungswelle 21 verläuft. Die Überbrückungswelle 21 ist z.B. über eine Kupplung 20 mit einem Kegeltreibritzel 19 im Getriebegehäuse 16 verbunden. Das Kegeltreibritzel 19 kämmt mit einem Tellerrad 18, das koaxial mit dem Sonnenrad 21 des Planetenradsatzes P verbunden ist. Das Sonnenrad 21 kämmt mit Planetenrädern 22, die in einem Träger 24 gelagert sind und in einer Umfangsverzahnung 23 laufen. Der Träger 24 ist mit der Radnabe 12 gekoppelt. Zwischen dem Träger 24 und der Radnabe 12 ist eine Betriebsbremsvorrichtung 17 eingegliedert.

Die Betriebsbremsvorrichtung 17 ist zweckmäßigerweise eine Trommelbackenbremse mit hydraulischer Servo-Betätigung, oder eine trocken- oder nasslaufende hydraulische Lamellenbremse. Die Betriebsbremsvorrichtung 17 kann dabei so ausgelegt sein, dass sie durch Druckaufbau, vorzugsweise über einen Druckspeicher, eingerückt wird. Alternativ könnten die Betriebsbremsvorrichtung auch so ausgelegt sein, dass sie drucklos durch Federkraft eingerückt, und gegen die Federkraft hydraulisch ausgerückt wird. Im letztgenannten Fall könnte die Betriebsbremsvorrichtung 17 auch die Funktion einer Feststellbremse übernehmen.

Der Versetzungswinkel a zwischen der Drehachse Y beispielsweise der Überbrückungswelle 21 und der Drehachse des Sonnenrads 21 ist im Regelfall 90°. Der Hydromotor H und auch gegebenenfalls das Mehrgang-Schaltgetriebe 24 befinden sich oberhalb des Tunnels 7 und hier sogar oberhalb der Radnabe 12, wobei der Hydromotor H über die Seitenwand 9 des Tunnels 7 nach innen versetzt liegen kann. Gestrichelt ist mit der Drehachse Y1 ein Versetzungswinkel α größer 90° angedeutet, der zweckmäßig sein kann, um dem großen Toleranzbereich der Breite des Reifens 11 Rechnung zu tragen und den Hydromotor H so weit wie möglich nach innen zu verlagern. Für diesen Fall kann es zweckmäßig sein, die abgeschrägte Seitenwand 9' des Tunnels 7 zumindest im Bereich der Radantriebseinheit A vorzusehen.

## Patentansprüche

1. Radantriebseinheit (A) für einen Straßenfertiger (F) oder Beschicker, mit wenigstens einem am Chassis (1) abgestützten Rad (3) und einem in der Radnabe (12) angeordneten Planetenradsatz (P), dessen Sonnenrad (18) mit der Ausgangswelle (13) eines gegenüber dem Chassis (1) abgestützten, außerhalb des Rads (3) angeordneten Hydromotors (H) in Antriebsverbindung bringbar ist, wobei in der Antriebsverbindung zwischen der Ausgangswelle (13) und dem Sonnenrad (21) eine die Winkelversetzung ausgleichende Kegetradgetriebestufe (K) vorgesehen ist, wobei die Kegelradgetriebestufe (K) ein mit dem Sonnenrad (21) koaxial verbundenes Tellerrad (18) und ein mit dem Tellerrad (18) kämmendes, zur Drehachse (Y, Y1) der Ausgangswelle (13) des Hydromotors (H) achsparalleles Kegeltreibritzel (19) aufweist, **dadurch gekennzeichnet, dass** der Hydromotor (H) mit gegenüber der Drehachse des Sonnenrades (18) um etwa 90° versetzter Ausgangswelle (13) oberhalb der Radnabe (12) angeordnet ist, in der Antriebsverbindung zwischen der Ausgangswelle (13) und dem Sonnenrad (21) zusätzlich ein Mehrgang-Schallgetriebe vorgesehen ist, dass das Tellerrad (18) und das Kegeltreibritzel (19) in einem Getriebegehäuse (16) des Planetenradsatzes (P) angeordnet sind, und dass sich vom Getriebegehäuse (16) zum Hydromotor (H) bzw. zum Mehrgang-Schaltgetriebe (14) ein Gehäusetunnel (15) erstreckt, in dem eine das Kegeltreibritzel (19) aufweisende oder damit gekuppelte Überbrückungswelle (21) gelagert ist.

2. Radantriebseinheit nach Anspruch 1, **dadurch gekennzeichnet, dass** das Mehrgang-Schaltgetriebe (14) ein Zweigang-Schaltgetriebe, vorgesehen ist.

3. Radantriebseinheit nach Anspruch 1, **dadurch gekennzeichnet, dass** der Versetzungswinkel (α) größer ist als 90°, und dass die Drehachse (Y1) der Ausgangswelle (13) und der Hydromotor (H) gegenüber dem Reifen (11) des Rads (3) nach innen in Richtung zur Längsmitte (X) gekippt sind.

4. Radantriebseinheit nach Anspruch 1, **dadurch gekennzeichnet, dass** der Hydromotor (H) oberhalb eines Tunnels (7) einer Längsfördervorrichtung im Chassis (1), angeordnet ist.

5. Radantriebseinheit nach Anspruch 4, **dadurch gekennzeichnet, dass** der Tunnel (7) der Längsfördervorrichtung zumindest im Bereich der Radantriebseinheit (A) eine nach innen abgeschrägte Seitenwand (9') aufweist.

6. Radantriebseinheit nach Anspruch 1, **dadurch gekennzeichnet, dass** das Mehrgang-Schaltgetriebe (14) ein Stirnrad-Aufsteckgetriebe oder ein Koaxial-Planetengetriebe ist, das mechanisch, hydraulisch oder mit einer elektrischen Schaltkupplung schaltbar ist.

7. Radantriebseinheit nach Anspruch 1, **dadurch gekennzeichnet, dass** an der der Kegelradgetriebestufe (K) abgewandten Seite in die Radnabe (12) zwischen einem Träger (24) des Planetenradsatzes (P) und der Radnabe (12) eine Betriebsbremsvorrichtung (17) eingegliedert ist, die als Trommelbackenbremse mit hydraulischer Servobetätigung oder als trocken- oder nasslaufende hydraulische Lamellenbremse ausgebildet ist.

8. Radantriebseinheit nach Anspruch 7, **dadurch gekennzeichnet, dass** die Betriebsbremsvorrichtung entweder mit Druckaufbau, vorzugsweise über einen Druckspeicher, oder in drucklosem Zustand durch Federkraft einrückbar und gegen die Federkraft hydraulisch ausrückbar ist.

## Claims

1. Wheel drive unit (A) for a road finisher (F) or feeder, having at least one wheel (3) supported on the chassis (1) and a planetary gear set (P) arranged in the wheel hub (12), of which the sun gear (18) can be brought into drive connection with the output shaft (13) of a hydromotor (H) arranged outside of the wheel (3) and supported with respect to the chassis (1), wherein a bevel gear stage (K) compensating the angular offset is provided in the drive connection between the output shaft (13) and the sun gear (21), wherein the bevel gear stage (K) comprises a ring gear (18) connected coaxially with the sun gear (21) and a bevel drive pinion (19) engaging with the ring gear (18) and axis-parallel to the rotation axis (Y, Y1) of the output shaft (13) of the hydromotor (H), **characterised in that** the hydromotor (H) is arranged, with the output shaft (13) offset by around 90° relative to the rotation axis of the sun gear (18), above the wheel hub (12), a multi-gear transmission is additionally provided in the drive connection between the output shaft (13) and the sun gear (21), the ring gear (18) and the bevel drive pinion (19) are arranged in a gear housing (16) of the planetary gear set (P), and **in that** a housing tunnel (15) extends from the gear housing (16) to the hydromotor (H) and to the multi-gear transmission (14), in which a bridging shaft (21) is mounted which comprises the bevel drive pinion (19) or is coupled thereto.

2. Wheel drive unit according to claim 1, **characterised in that** the multi-gear transmission (14) is provided as a two-stage transmission.

3. Wheel drive unit according to claim 1, **characterised in that** the offset angle (α) is greater than 90° and the rotation axis (Y1) of the output shaft and the hydromotor (H) are tilted with respect to the tyre (11) of the wheel (3) inwardly in the direction of the longitudinal middle (X).

4. Wheel drive unit according to claim 1, **characterised in that** the hydromotor (H) is arranged above a tunnel (7) of a longitudinal transport device in the chassis (1).

5. Wheel drive unit according to claim 4, **characterised in that** the tunnel (7) of the longitudinal transport device comprises an inwardly inclined side wall (9') at least in the region of the wheel drive unit (A).

6. Wheel drive unit according to claim 1, **characterised in that** the multi-gear transmission (14) is a front wheel shaft mounted gear or a coaxial planetary gear which can be switched mechanically, hydraulically or with an electric clutch.

7. Wheel drive unit according to claim 1, **characterised in that** a service brake device (17) is incorporated, on the side facing away from the bevel gear stage (K), into the wheel hub (12) between a carrier (24) of the planetary gear set (P) and the wheel hub (12), said service brake device (17) being designed as a drum shoe brake with hydraulic servo actuation or as a dry or wet running hydraulic lamellar brake.

8. Wheel drive unit according to claim 7, **characterised in that** the service brake device can be engaged either with pressure build-up, preferably via a pressure accumulator, or in the pressureless state by spring force and can be hydraulically released against the spring force.

## Revendications

1. Ensemble d'entraînement de roue (A) pour un finisseur (F) ou un dispositif d'alimentation, comprenant au moins une roue (3) soutenue sur le châssis (1) et un train planétaire (P) disposé dans le moyeu de roue (12), dont la roue solaire (18) peut être amenée en liaison d'entraînement avec l'arbre de sortie (13) d'un moteur hydraulique (H) soutenu par rapport au châssis (1) et disposé à l'extérieur de la roue (3), un étage à engrenage conique (K) équilibrant le déport d'angle étant prévu dans la liaison d'entraînement entre l'arbre de sortie (13) et la roue solaire (21), l'étage à engrenage conique (K) présentant une couronne de différentiel (18) reliée coaxialement à la roue solaire (21) et un pignon moteur conique (19) engrenant avec la couronne de différentiel (18) et parallèle à l'axe de rotation (Y, Y1) de l'arbre de sortie (13) du moteur hydraulique (H), **caractérisée en ce que** le moteur hydraulique (H) est disposé avec l'arbre de sortie (13) décalé d'environ 90° par rapport à l'axe de rotation de la roue solaire (18) au-dessus du moyeu de roue (12), une boîte de vitesse à plusieurs vitesses est prévue en supplément dans la liaison d'entraînement entre l'arbre de sortie (13) et la roue solaire (21), **en ce que** la couronne de différentiel (18) et le pignon moteur conique (19) sont disposés dans un carter de boîte de vitesse (16) du train planétaire (P) et **en ce qu'**un tunnel de carter (15), dans lequel est logé un arbre de franchissement (21) présentant le pignon moteur conique (19) ou couplé à celui-ci, s'étend depuis le carter de boîte de vitesse (16) vers le moteur hydraulique (H) et la boîte de vitesse à plusieurs vitesses (14).

2. Ensemble d'entraînement de roue selon la revendication 1, **caractérisée en ce qu'**une boîte de vitesse à deux vitesses est prévue pour la boîte de vitesse à plusieurs vitesses (14).

3. Ensemble d'entraînement de roue selon la revendication 1, **caractérisée en ce que** l'angle de déport (α) est supérieur à 90° et **en ce que** l'axe de rotation (Y1) de l'arbre de sortie (13) et le moteur hydraulique (H) sont basculés par rapport au pneu (11) de la roue (3) vers l'intérieur en direction du centre longitudinal (X).

4. Ensemble d'entraînement de roue selon la revendication 1, **caractérisée en ce que** le moteur hydraulique (H) est disposé au-dessus d'un tunnel (7) d'un dispositif de transport longitudinal dans le châssis (1).

5. Ensemble d'entraînement de roue selon la revendication 4, **caractérisée en ce que** le tunnel (7) du dispositif de transport longitudinal présente une paroi latérale (9') chanfreinée vers l'intérieur au moins dans la zone de l'ensemble d'entraînement de roue (A).

6. Ensemble d'entraînement de roue selon la revendication 1, **caractérisée en ce que** la boîte de vitesse à plusieurs vitesses (14) est un engrenage à emboîtement à roue droite ou un engrenage planétaire coaxial, qui peut être commuté de façon mécanique, hydraulique ou avec un accouplement électrique.

7. Ensemble d'entraînement de roue selon la revendication 1, **caractérisée en ce que** sur le côté, opposé à l'étage d'engrenage conique (K), dans le moyeu de roue (12) entre un support (24) du train planétaire (P) et le moyeu de roue (12) est intégré un dispositif de frein de service (17), qui est conçu comme un frein à mâchoires à tambour avec une servocommande hydraulique ou sous la forme d'un frein à lamelles hydraulique à fonctionnement sec ou humide.

8. Ensemble d'entraînement de roue selon la revendication 7, **caractérisée en ce que** le dispositif de freinage de service peut être enclenché soit avec un établissement de pression, de préférence par un accumulateur de pression, ou dans l'état hors pression par la force de ressort et peut être désenclenché de façon hydraulique contre la force du ressort.
